## Europäisches Patentamt

## European Patent Office

## Office européen des brevets

(11) Veröffentlichungsnummer: **0 292 012 B1**

# EUROPÄISCHE PATENTSCHRIFT

(45) Veröffentlichungstag der Patentschrift: **14.08.91**

(21) Anmeldenummer: **88108159.0**

(22) Anmeldetag: **20.05.88**

(51) Int. Cl.⁵: **B01D 53/36**, B01D 53/34, B03C 3/00

(54) Verfahren zur Minderung des Ammoniakgehaltes des Flugstaubes von Verbrennungsanlagen und Vorrichtung zur Durchführung des Verfahrens.

(30) Priorität: **22.05.87 DE 3717194**

(43) Veröffentlichungstag der Anmeldung:
**23.11.88 Patentblatt 88/47**

(45) Bekanntmachung des Hinweises auf die
Patenterteilung:
**14.08.91 Patentblatt 91/33**

(84) Benannte Vertragsstaaten:
**DE NL**

(56) Entgegenhaltungen:

**DERWENT JAPANESE PATENT REPORT,
Band 82, Nr. 44, Sektion J, "Chemical Engineering", 3. Dezember 1988, Derwent Publications Ltd, London, GB; & JP-B-82 051 332**

(73) Patentinhaber: **Siemens Aktiengesellschaft
Wittelsbacherplatz 2
W-8000 München 2(DE)**

(72) Erfinder: **Ranly, Hans, Dr.
Wassergasse 20
W-8525 Marloffstein(DE)**

## Beschreibung

Die Erfindung bezieht sich auf ein Verfahren zur Minderung des Ammoniakgehaltes des Flugstaubes von Verbrennungsanlagen mit im Rauchgasstrom vor der Staubabscheideranlage installierter Denox-Anlage, bei der das in einer Ausheizstufe für den abgeschiedenen Flugstaub zurückgewonnene Ammoniak dem Rauchgas vor der Denox-Anlage wieder zugeführt wird.

Bei bekannten Anlagen zur Minderung der Stickoxide in Rauchgasen - sogenannten Denox-Anlagen - wird Ammoniak dem Rauchgas als Reduktionsmittel zugemischt und wird das Ammoniak-Rauchgas-Gemisch an beispielsweise titanoxid- und vanadiumoxidhaltigen Katalystoren vorbeigeleitet. Bei diesen bekannten Anlagen wird das Ammoniak aufgespalten und der Wasserstoff des Ammoniaks zur Reduktion der Stickoxide herangezogen. Als Reduktionsprodukte entstehen dann Wasser in Form von Wasserdampf und Stickstoff. Bei all diesen bekannten Denox-Anlagen wird ein mehr oder weniger großer Ammoniak-Schlupf festgestellt. Das überschüssige Ammoniak wird zum großen Teil mit dem Flugstaub abgeschieden. Der Flugstaub wird in der Zement- und Betonindustrie als Zuschlagstoff eingesetzt. Derzeit ist aber schon abzusehen, daß seitens der Zement- und Betonindustrie Grenzwerte für den Ammoniakgehalt im Flugstaub festgelegt werden.

Durch die DE-A- 30 32 927 und die DE-A- 34 25 070 ist es bereits bekannt, das im abgeschiedenen Flugstaub enthaltene Ammoniak auf thermischem Wege zumindest teilweise wieder zurückzugewinnen und dem Rauchgas vor der Denox-Anlage zuzumischen. Dabei kann die Aufheizung des abgeschiedenen Flugstaubes mit dem heißen Rauchgas der Verbrennungsanlage bzw. dem eines Hilfsheizofens erfolgen. Es ist eine Eigenart dieses Verfahrens, daß der Ammoniakbedarf gesenkt und weitgehend ammoniakfreier Staub erzeugt wird. Dafür ist aber der anlagentechnische Aufwand und der zusätzliche Energiebedarf für die Wiederaufheizung des Flugstaubes nicht unbeachtlich.

Der Erfindung liegt daher die Aufgabe zugrunde, den anlagetechnischen Aufand und den zusätzlichen Energiebedarf zu minimieren. Diese Aufgabe wird durch den Anspruch 1 gelöst. Weitere vorteilhafte Ausgestaltungen sind den Ansprüchen 2 bis 10 zu entnehmen.

Der Erfindung lag die Erkenntnis zugrunde, daß an den feineren Staubpartikeln verhältnismäßig mehr Ammoniak gebunden ist als an den gröberen Staubpartikeln. Daraus ergab sich wiederum die Überlegung, daß der Energieeinsatz bezogen auf die rückgewonnenen Ammoniakmengen verbessert werden kann, wenn man bevorzugt die feineren Staubpartikel ausheizt. Daher wird erfindungsgemäß bei der Verwendung einer mehrstufigen Staubabscheideranlage das Ammoniak nur aus weniger als der Hälfte des insgesamt anfallenden Staubes durch Zurückführung nur des in den hinteren Stufen des Staubabscheiders anfallenden feineren Staubes in die Ausheizstufe zurückgewonnen.

In besonders vorteilhafter Weiterbildung der Erfindung kann die Ausheizstufe nur an den in Strömungsrichtung hinteren Stufen der Staubabscheideranlage angeschlossenen Staubabführleitung angeschlossen sein. Dadurch läßt sich der zu treibende konstruktive Aufwand wie auch der Energieeinsatz deutlich vermindern.

In zweckmäßiger Ausgestaltung der Erfindung kann bei Verwendung einer mehrstufigen elektrostatischen Staubabscheideranlage nur der an der letzten Stufe der Staubabscheideranlage angeschlossene Zweig der Staubabführleitung mit einer solchen Ausheizanlage ausgerüstet sein. Diese Beschränkung auf den in der letzten Stufe der Staubabscheideranlage abfgeschiedenen Staub vermindert den Investitionsaufwand für die Ausheizstufe noch weiter und erfaßt dennoch den größten Teil des mit dem abgeschiedenen Staub ausgeschiedenen Ammoniaks. Es hat sich herausgestellt, daß der in der letzten Stufe einer elektrostatischen Staubabscheideranlage vorwiegend ausgeschiedene Feinstaub den relativ größten Anteil an Ammoniak enthält.

Weitere Einzelheiten der Erfindung werden anhand eines in der Figur dargestellten Ausführungsbeispiels erläutert. Es zeigt:
Die Figur eine schematische Darstellung einer Verbrennungsanlage mit einer erfindungsgemäßen Vorrichtung zur Abtrennung des Ammoniaks vom abgeschiedenen Staub.

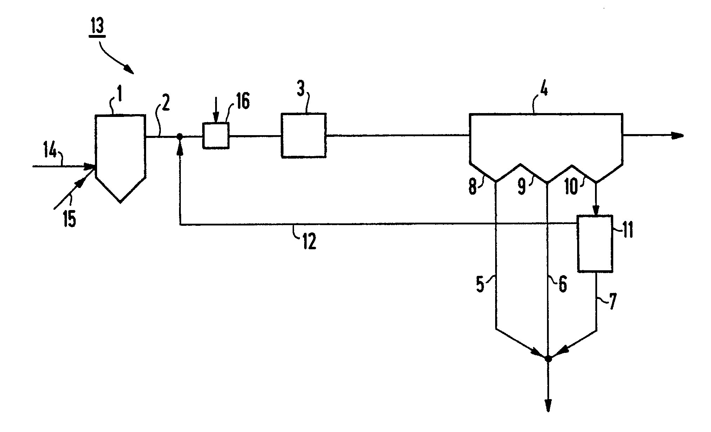

In der Verbrennungsanlage der FIG 1 erkennt man eine Brennkammer 1 mit einer im Rauchgaskanal 2 der Brennkammer 1 angeordneten Denox-Anlage 3 und einer der Denox-Anlage nachgeschalteten Staubabscheideranlage 4. Die Staubabscheideranlage 4 des Ausführungsbeispiels ist eine dreistufige elektrostatische Staubabscheideranlage mit je einer Staubabführleitung 5,6,7 je Stufe 8,9,10. In der Staubabführleitung 7 der dritten Stufe 10 der Staubabscheideranlage 4 ist eine Ausheizstufe 11 für den abgeschiedenen Flugstaub eingebaut. Diese Ausheizstufe 11 ist mit einer Abgasleitung 12 für das ausgeschiedene Ammoniak versehen, welche in den Rauchgaskanal 2 hinter der Brennkammer 1 zurückführt.

Beim Betrieb der Verbrennungsanlage 13 werden der Brennkammer 1 Kohle und ähnliche Brennstoffe über eine Brennstoffleitung 14 und Frischluft oder Sauerstoff über eine Frischluftleitung 15 zugeführt und verbrannt. Die entstehenden Rauchgase verlassen die Brennkammer 1 über den Rauchgaskanal 2. In den Rauchgaskanal wird Ammoniak mittels einer Eindüsvorrichtung 16 dem Rauchgas beigemischt, so daß in die Denox-Anlage 3 ein Rauchgas-Ammoniak-Gemisch einströmt. In den Katalysatoren der Denox-Anlage wird dabei das Ammoniak zu Stickstoff aufoxidiert und die Stickoxide mit dem Wasserstoff des Ammoniaks zu Wasser und Stickstoff reduziert, so daß in die Staubabscheideranlage ein staubbeladenes, nahezu stickoxidfreies Stickstoff-Rauchgas-Gemisch einströmt. In den drei Stufen 8,9,10 der elektrostatischen Staubabscheideranlage 4 wird zunächst der grobe, sodann der feinere und schließlich der ganz feine Flugstaub ausgeschieden. Weil die überwiegende Menge des Ammoniaks an den ganz feinen Flugstaub gebunden ist, wird auch nur dieser durch die Ausheizstufe 11 hindurchgeleitet, bevor er mit dem Flugstaub der übrigen Staubabscheiderstufen 8,9 zusammengeführt wird. In der Ausheizstufe 11 wird der Flugstaub von im Gegenstrom geführtem aufgeheizter Frischluft durchströmt, aufgeheizt und wird das dabei ausgetriebene Ammoniak mittels der aufgeheizten Frischluft in den Rauchgaskanal 2 hinter der Brennkammer 1 zurückgeführt.

Der Gesamt-Ammoniakgehalt des abgezogenen Flugstaubes wird durch die bloße Ausheizung des Feinstaubes der dritten Staubabscheiderstufe deutlich abgesenkt, so daß eventuelle Grenzwerte für die Belastung des Flugstaubes mit Ammoniak leicht unterschritten werden können. Der so ausgeschiedene Flugstaub kann direkt an die Zementindustrie oder Betonindustrie zur weiteren Verwendung weitergeleitet werden.

Als Ausheizstufe 11 kann auch eine indirekt beheizte Drehtrommel verwendet werden, die chargenweise beladen wird und dessen Gasinhalt vor der Entladung abgesaugt wird. Dabei ist es zweckmäßig, das abgesaugte Ammoniak in einem Gasspeicher zwischenzulagern und kontinuierlich dem in der Eindüsvorrichtung 16 eingegebenen primären Ammoniak beizumischen.

**Patentansprüche**

1. Verfahren zur Minderung des Ammoniakgehaltes des Flugstaubes bei Verbrennungsanlagen mit im Rauchgasstrom vor der Staubabscheideranlage (4) installierter Denox-Anlage (3), bei der das in einer Ausheizstufe (11) für den abgeschiedenen Flugstaub zurückgewonnene Ammoniak dem Rauchgas vor der Denox-Anlage wieder zugeführt sind,
**dadurch gekennzeichnet,**
daß bei Verwendung einer mehrstufigen Staubabscheideranlage (4) das Ammoniak nur aus weniger als der Hälfte des insgesamt anfallenden Staubes durch Zuführung nur des in den hinteren Stufen des Staubabscheiders anfallenden feineren Staubes in die Ausheizstufe (11) zurückgewonnen wird.

2. Vorrichtung zur Durchführung des Verfahrens nach Anspruch 1 mit einer Brennkammer (1), einer im Rauchgaskanal (2) der Brennkammer eingebauten Denox-Anlage (3) und der Denox-Anlage nachgeschalteten Staubabscheideranlage (4) mit mindestens einer Staubabführleitung (5,6,7) und mindestens einer an der Staubabführleitung angeschlossenen Ausheizstufe (11) für den abgeschiedenen Staub,
**dadurch gekennzeichnet,**
daß diese nur an den in Strömungsrichtung hinteren Stufen (10) der Staubabscheideranlage (4) angeschlossenen Staubabführleitungen (7) angeschlossen ist.

3. Vorrichtung nach Anspruch 2,
**dadurch gekennzeichnet,**
daß bei einer mehrstufigen, elektrostatischen Staubabscheideranlage (4) nur der an der letzten Stufe (10) der Staubabscheideranlage (4) angeschlossene Zweig der Staubabführleitung (7) mit einer solchen Ausheizstufe (11) ausgerüstet ist.

4. Vorrichtung nach Anspruch 2,
**dadurch gekennzeichnet,**
daß als Ausheizstufe eine indirekte beheizte Drehtrommel verwendet ist, die chargenweise betrieben wird und deren Gasphase abgesaugt wird.

5. Vorrichtung nach Anspruch 4,
**dadurch gekennzeichnet,**
daß das abgesaugte Ammoniak über einen Zwischenspeicher geleitet wird, von dem es dem primär in die Rauchgasleitung (2) eingespeisten Ammoniak beigemischt wird.

6. Vorrichtung nach Anspruch 2,
**dadurch gekennzeichnet,**
daß eine Abgasleitung (12) für das ausgeschiedene Ammoniak der Ausheizstufe (11) in die Brennkammer (1) führt.

7. Vorrichtung nach Anspruch 2,
**dadurch gekennzeichnet,**
daß eine Abgasleitung für das ausgeschiedene Ammoniak der Ausheizstufe in den Rauchgaskanal vor der Denox-Anlage führt.

8. Vorrichtung nach Anspruch 1 oder 2,
**dadurch gekennzeichnet,**
daß die Ausheizstufe von einem vorgewärmten Ausheizgas durchströmt wird, welches das ausgeschiedene Ammoniak mitnimmt.

9. Vorrichtung nach Anspruch 8,
**dadurch gekennzeichnet,**
daß das Ausheizgas vorgeheizte Frischluft ist.

10. Vorrichtung nach Anspruch 9,
**dadurch gekennzeichnet,**
daß das Ausheizgas in einem der Ausheizvorrichtung nachgeschalteten Aschekühler vorgewärmt wird.

## Claims

1. A method for reducing the presence of ammonia in flue dust in combustion systems with a Denox system (3), installed in the flue gas stream path before the dust separator system (4), in which the ammonia recovered in a baking-out stage (11) for the separated flue dust, is supplied again to the flue gas before the Denox system,
characterised in that when using a multi-stage dust separator system (4) the ammonia is recovered in the baking-out stage (11) only from less than half the total dust obtained by supply of only the finer dust obtained in the downstream stages of the dust separator.

2. A device for carrying out the method according to claim 1, with a combustion chamber (1), a Denox system (3) built-in the flue gas duct (2) of the combustion chamber and the dust separator system (4) downstream of the Denox system, with at least one dust outlet line (5,6,7) and at least one baking-out stage (11) connected to the dust outlet line for the separated dust,
characterised in that this is only connected to the flow path to the dust outlet line (7) connected to the downstream stages (10) of the dust separator system (4).

3. A device according to claim 2,
characterised in that with a multi-stage electrostatic dust separator system (4) only the branch of the dust outlet line (7), connected to the last stage (10) of the dust separator system (4), is provided with such a baking-out stage (11).

4. A device according to claim 2,
characterised in that, as baking-out stage, an indirectly heated rotating drum is used, which is operated in batch quantities and the gas phase of which is drawn off.

5. A device according to claim 4,
characterised in that the drawn off ammonia is guided by way of an intermediate store, from which it is admixed with the primary ammonia fed into the flue gas line (2).

6. A device according to claim 2,
characterised in that an exhaust gas line (12) for the separated ammonia of the baking-out stage (11) leads into the combustion chamber (1).

7. A device according to claim 2,
characterised in that an exhaust gas line (12) for the separated ammonia of the baking-out stage leads into the flue gas channel before the Denox system.

8. A device according to claim 1 or 2,
characterised in that the baking-out stage has preheated baking-out gas flowing through it, which takes with it the separated ammonia.

9. A device according to claim 8,
characterised in that the baking-out gas is preheated fresh air.

10. A device according to claim 9,
characterised in that the baking-out gas is preheated in an ash cooler downstream of the baking-out device.

## Revendications

1. Procédé de réduction de la teneur en ammoniac des cendres volantes d'installations de combustion comprenant une installation Denox (3) montée dans le courant des gaz de fumée en amont de l'installation à séparateur de poussières (4), qui consiste à retourner l'ammoniac, récupéré dans un étage de chauffage (11) des cendres volantes séparées, au gaz de fumée en amont de l'installation Denox caractérisé

en ce qu'il consiste, dans le cas de l'utilization d'une installation à séparateur de poussières (4) à plusieurs étages, à récupérer l'ammoniac seulement à partir de moins de la moitié de toute la poussière qui se produit en envoyant à l'étage de chauffage (11) seulement la poussière la plus fine qui se produit dans les étages aval du séparateur de poussière.

2. Dispositif pour la mise en oeuvre du procédé suivant la revendication 1, comprenant une chambre de combustion (1), une installation Denox (3) montée dans le canal pour les gaz de fumée (2) de la chambre de combustion et une installation à séparateur de poussières (4), qui est montée en aval de l'installation Denox et qui comprend au moins un conduit d'évacuation de la poussière (5,6,7) et au moins un étage de chauffage (11) raccordé au conduit d'évacuation de poussières et destiné à la poussière séparée, caractérisé

en ce que cet étage de chauffage n'est raccordé qu'au conduit d'évacuation de poussières (7) raccordé aux étages (10) en aval, dans la direction d'écoulement, de l'installation à séparateur de poussières (4).

3. Dispositif suivant la revendication 2, caractérisé

en ce que, dans le cas d'une installation à séparateur de poussières (4) électrostatique à plusieurs étages, seule la branche du conduit d'évacuation de la poussière (7), raccordée au dernier étage (10) de l'installation à séparateur de poussières (4), est munie d'un étage de chauffage (11) de ce genre.

4. Dispositif suivant la revendication 2, caractérisé

en ce que, comme étage de chauffage, est utilisé un tambour tournant à chauffage indirect, fonctionnant par charge et dont la phase gazeuse est aspirée.

5. Dispositif suivant la revendication 4, caractérisé

en ce que l'ammoniac aspiré est envoyé dans un réservoir-accumulateur intermédiaire, à partir duquel il est mélangé à l'ammoniac envoyé de manière primaire dans le conduit pour le gaz de fumée (2).

6. Dispositif suivant la revendication 2, caractérisé

en ce qu'un conduit de sortie des gaz (12), destiné à l'ammoniac séparé, mène de l'étage de chauffage (11) à la chambre de combustion (1).

7. Dispositif suivant la revendication 2, caractérisé

en ce qu'un conduit de sortie du gaz, destiné à l'ammoniac séparé, mène de l'étage de chauffage au canal pour le gaz de fumée en amont de l'installation Denox.

8. Dispositif suivant la revendication 1 ou 2, caractérisé

en ce que l'étage de chauffage est parcouru par un gaz de chauffage préchauffé qui entraîne l'ammoniac séparé.

9. Dispositif suivant la revendication 8, caractérisé

en ce que le gaz de chauffage est de l'air frais préchauffé.

10. Dispositif suivant la revendication 9, caractérisé

en ce que le gaz de chauffage est préchauffé dans un dispositif de refroidissement des cendres monté en aval du dispositif de chauffage.